# FASCICULE DE BREVET EUROPEEN

(11) **EP 2 471 274 B1**
(45) Date de publication et mention de la délivrance du brevet: **28.09.2016**
(21) Numéro de dépôt: 10761047.9
(22) Date de dépôt: 12.08.2010
(51) Int. Cl.: H04Q 11/00

(54) **REPRESENTATION DES DEGRADATIONS PHYSIQUES DANS UN RESEAU DE COMMUNICATION OPTIQUE**
DARSTELLUNG VON PHYSIKALISCHEN DEGRADIERUNGEN IN EINEM OPTISCHEN KOMMUNIKATIONSNETZ
REPRESENTATION OF THE PHYSICAL DEGRADATIONS IN AN OPTICAL COMMUNICATION NETWORK

(30) Priorité: 24.08.2009 FR 0955752
(43) Date de publication de la demande: 04.07.2012
(73) Titulaire: ALCATEL LUCENT, 92100 Boulogne-Billancourt (FR)
(72) Inventeur: MOREA, Annalisa, F-91620 Nozay (FR); LEPLINGARD, Florence, F-78141 Velizy (FR)
(74) Mandataire: Shamsaei Far, Hassan
(86) Numéro de dépôt international: PCT/FR2010/051701
(87) Numéro de publication internationale: WO 2011/023882

(56) Documents cités:
- WO-A2-2007/024317
- FR-A1- 2 864 386
- LEE HUAWEI G BERNSTEIN GROTTO NETWORKING D LI HUAWEI G MARTINELLI CISCO Y: "A Framework for the Control of Wavelength Switched Optical Networks (WSON) with Impairments; draft-ietf-ccamp-wson-impairments-00.txt", A FRAMEWORK FOR THE CONTROL OF WAVELENGTH SWITCHED OPTICAL NETWORKS (WSON) WITH IMPAIRMENTS; DRAFT-IETF-CCAMP-WSON-IMPAIRMENTS-00.TXT, INTERNET ENGINEERING TASK FORCE, IETF; STANDARDWORKINGDRAFT, INTERNET SOCIETY (ISOC) 4, RUE DES FALAISES CH- 1205 G, vol. ccamp, 29 juin 2009 (2009-06-29), XP015062878,

## Description

L'invention se rapporte au domaine des réseaux de communication optiques, en particulier aux réseaux optiques capables d'établir des connexions optiques transparentes pour transporter des flux de données.

L'établissement d'une connexion transparente dans un réseau optique transparent ou hybride implique généralement plusieurs opérations pouvant être effectuées simultanément ou successivement, à savoir la sélection d'un chemin de connexion spatial dans le réseau, la sélection d'un ou plusieurs canaux de longueurs d'onde disponibles pour porter les données à transmettre sur ce chemin de connexion et l'estimation de la qualité de la transmission atteignable avec le chemin de connexion et les canaux longueurs d'onde sélectionnés.

On a décrit dans FR-A-2864386 une méthode pour engendrer une représentation des dégradations physiques des liaisons unidirectionnelles dans un réseau de communication optique et une méthode pour déterminer une qualité de transmission, par exemple sous la forme du taux d'erreur binaire, d'une connexion optique transparente unidirectionnelle à l'aide de cette représentation.

WO-2007/024317 concerne un procédé et un appareil d'implémentation d'une qualité en réseau optique utilisant un taux d'erreur sur les bits et une dispersion chromatique.

Selon un mode de réalisation, l'invention fournit un procédé pour engendrer une représentation des dégradations physiques dans un réseau de communication optique comportant des noeuds de commutation transparents mutuellement reliés par des liaisons optiques, ledit procédé comportant :
associer une paire de liaisons optiques contradirectionnelles en tant que lien bidirectionnel,
fournir au moins un paramètre de dégradation physique respectif de chacune desdites liaisons optiques contradictionnelles de ladite paire,
déterminer au moins un paramètre de dégradation physique caractéristique dudit lien bidirectionnel à partir d'un paramètre de dégradation physique respectif de chacune desdites liaisons optiques contradirectionnelles de ladite paire,
stocker un descripteur du lien bidirectionnel comportant ledit au moins un paramètre de dégradation physique caractéristique dudit lien bidirectionnel.

Selon d'autres modes de réalisation avantageux, ce procédé peut présenter une ou plusieurs des caractéristiques suivantes :
- le ou les paramètre(s) de dégradation physique caractéristique(s) du lien bidirectionnel comporte(nt) un paramètre de dispersion chromatique résiduelle, ledit paramètre de dispersion chromatique résiduelle étant obtenu en tant que la valeur moyenne arithmétique de paramètres de dispersion chromatique résiduelle de chacune desdites liaisons optiques contradirectionnelles de ladite paire.
- le ou les paramètre(s) de dégradation physique caractéristique(s) du lien bidirectionnel comporte(nt) un paramètre de rapport signal à bruit optique, ledit paramètre de rapport signal à bruit optique étant obtenu en tant que la plus petite valeur des paramètres de rapport signal à bruit optique de chacune desdites liaisons optiques contradirectionnelles de ladite paire.
- le ou les paramètre(s) de dégradation physique caractéristique(s) du lien bidirectionnel comporte(nt) un paramètre de phase non-linéaire, ledit paramètre de phase non-linéaire étant obtenu en tant que la plus grande valeur des paramètres de phase non-linéaire de chacune desdites liaisons optiques contradirectionnelles de ladite paire.
- le ou les paramètre(s) de dégradation physique caractéristique(s) du lien bidirectionnel comporte(nt) un paramètre de dispersion de mode de polarisation, ledit paramètre de dispersion de mode de polarisation étant obtenu en tant que la valeur moyenne quadratique de paramètres de dispersion de mode de polarisation de chacune desdites liaisons optiques contradirectionnelles de ladite paire.
- le procédé comporte l'étape de diffuser le descripteur du lien bidirectionnel dans un message d'un protocole de routage à destination d'un ou plusieurs des noeuds du réseau de communication optique.

Selon un mode de réalisation, l'invention fournit également une base de données de liens pour un réseau de communication optique comportant des noeuds de commutation transparents mutuellement reliés par des liaisons optiques, au moins deux desdites liaisons optiques étant contradirectionnelles et étant appariées en tant que lien bidirectionnel, ladite base de données comportant un descripteur dudit lien bidirectionnel, ledit descripteur de lien bidirectionnel comportant au moins un paramètre de dégradation physique caractéristique dudit lien bidirectionnel, ledit paramètre de dégradation physique étant obtenu à partir de paramètres de dégradation physique correspondants de chacune desdites liaisons optiques contradirectionnelles de ladite paire.

Une base de données de ce type peut être implantée dans une unité de commande d'un noeud du réseau ou dans un appareil séparé, par exemple un appareil de gestion de réseau ou un appareil de calcul de chemin. Elle peut comporter les descripteurs des liens bidirectionnels d'une plus ou moins grande partie du réseau, selon qu'il est mis en oeuvre une diffusion de ces descripteurs, par exemple par le protocole de routage, ou que l'information sur les dégradations physiques est au contraire conservée à un niveau local.

Selon un mode de réalisation, l'invention fournit également un procédé pour déterminer une qualité de transmission d'une connexion optique transparente, ladite connexion étant destinée relier au moins deux dispositifs émetteurs-récepteurs optiques de manière bidirectionnelle le long d'un chemin de connexion dans un réseau de communication optique, ledit procédé comprenant les étapes suivantes: fournir un descripteur de lien bidirectionnel pour chacun d'une pluralité de liens bidirectionnels disposés sur ledit chemin de connexion, ledit descripteur de lien bidirectionnel comportant à chaque fois au moins un paramètre de dégradation physique caractéristique dudit lien bidirectionnel, ledit lien bidirectionnel comportant à chaque fois une paire de liaisons optiques contradirectionnelles, ledit paramètre de dégradation physique étant obtenu à partir de paramètres de dégradation physique correspondants de chacune desdites liaisons optiques contradirectionnelles de ladite paire,
déterminer ladite qualité de transmission de la connexion en fonction desdits descripteurs de liens bidirectionnels.

Selon des modes de réalisation, les descripteurs des liens bidirectionnels peuvent être fournis par extraction d'une ou plusieurs bases de données implantée(s) dans des unités de commande des noeuds du réseau ou dans des appareils séparés, par exemple un appareil de gestion de réseau ou un appareil de calcul de chemin.

Selon un mode de réalisation préféré, le ou les paramètre(s) de dégradation physique caractéristique(s) du lien bidirectionnel comporte(nt) un ou plusieurs paramètre(s) cumulatif(s), ledit procédé comportant la détermination d'une valeur du ou de chaque paramètre cumulatif cumulée le long dudit chemin de connexion et la détermination de la qualité de transmission en fonction de la ou des valeur(s) cumulée(s) le long du chemin de connexion.

Un autre mode de réalisation est le provisionnement d'un appareil selon revendication 10 et un réseau comprenant cet appareil, selon revendication 11.

L'invention part du constat qu'il est fréquemment fait usage de connexions bidirectionnelles dans un réseau de communication optique. Une idée à la base de l'invention est de fournir une représentation des dégradations physiques dans un réseau optique à l'échelle des liens bidirectionnels afin de pouvoir déterminer la qualité de transmission d'une connexion optique transparente bidirectionnelle sans recourir à une décomposition de cette connexion bidirectionnelle en deux connexions contradirectionnelles. Une autre idée à la base de l'invention est d'agréger des paramètres de dégradation physique des liaisons optiques unidirectionnelles constitutives d'un lien bidirectionnel afin d'obtenir une représentation à la fois compacte et fiable des dégradations physiques encourues par les signaux sur ce lien bidirectionnel.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :
La figure 1 est une représentation schématique fonctionnelle d'un réseau de communication optique dans lequel des modes de réalisation de l'invention peuvent être mis en oeuvre.
La figure 2 est une représentation schématique fonctionnelle d'une unité de commande de noeud, pouvant être utilisée dans les noeuds du réseau de la figure 1.
La figure 3 est un diagramme d'étape d'un procédé pour engendrer des descripteurs de liens agrégés, pouvant être mis en oeuvre dans le réseau de la figure 1.

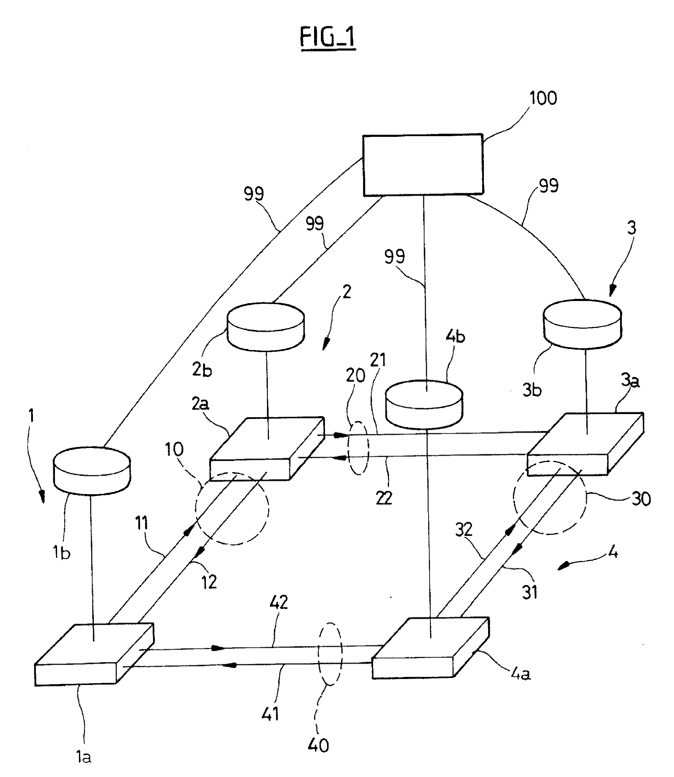

En référence à la figure 1, on a représenté un exemple très simple d'un réseau optique à multiplexage de longueurs d'ondes (WDM) capable d'établir des connexions transparentes. Le réseau comporte quatre noeuds de commutation transparents 1, 2, 3 et 4 reliés par des liaisons optiques unidirectionnelles 11, 12, 21, 22, 31, 32, 41 et 42. On entend par noeud de commutation transparent un dispositif capable de commuter des signaux optiques dans le domaine optique sans conversion dans le domaine électronique. Ce terme n'exclut pas que le noeud puisse aussi être capable de régénérer des signaux optiques par conversion O/E/O si besoin. Le terme de noeud hybride est aussi employé pour désigner un noeud transparent muni de moyens de régénération des signaux.

Sur la figure 1, on a distingué pour chaque noeud un dispositif de commutation optique transparent ou hybride 1a, 2a, 3a ou 4a faisant partie du plan de données et une unité de commande 1 b, 2b, 3b ou 4b faisant partie du plan de contrôle. La séparation du réseau entre plan de données et plan de contrôle est de nature fonctionnelle. Elle est représentée à des fins didactiques mais ne correspond pas nécessairement à la structure concrète des éléments du réseau.

De nombreuses architectures de dispositifs de commutation optiques connues conviennent pour réaliser les dispositifs 1a à 4a, par exemple à base de composants tels que multiplexeurs et démultiplexeurs de longueurs d'onde, diviseurs et combineurs de faisceaux, matrices de commutation optique, commutateurs à sélection de longueurs d'onde, bloqueurs de longueurs d'onde, portes optiques, convertisseurs de longueurs d'onde, etc. Les dispositifs 1a à 4a peuvent aussi comporter des interfaces de conversion électrique-optique, par exemple des émetteurs optiques, pour insérer des canaux de longueurs d'onde dans les liaisons optiques et des interfaces de conversion optique-électrique, par exemple des récepteurs optiques, pour démoduler les données portées par des canaux de longueurs d'onde.

Les liaisons optiques unidirectionnelles 11 à 42 comportent des fibres optiques pour transporter à chaque fois un multiplex de canaux de longueurs d'onde entre deux noeuds voisins. Ces liaisons peuvent aussi comporter différents composants non représentés, tels que amplificateurs optiques et/ou dispositifs de compensation de la dispersion, notamment pour couvrir des distances de propagation plus longues.

Le réseau de la figure 1 présente une topologie très simple en anneau à des fins de clarté. Toutefois, l'enseignement qui suit n'est pas limité à cet exemple et s'applique à un réseau de topologie quelconque présentant un nombre quelconque de noeuds et de liens.

Dans un mode de réalisation, les unités de commande des noeuds 1 b à 4b communiquent entre elles à travers des canaux de contrôle pour mettre en oeuvre des fonctionnalités telles que la découverte de la topologie, le calcul de route, l'établissement des connexions, la détection et la récupération des fautes et autres. Cet agencement constitue le plan de contrôle distribué du réseau, qui peut être mis en oeuvre à l'aide de la suite protocolaire GMPLS (Generalized Multi Protocol Label Switching), dont on trouvera une description notamment dans les publications de l'IETF (Internet Engineering Task Force).

Dans un autre mode de réalisation, certaines de ces fonctionnalités sont mises en oeuvre de manière centralisée au niveau d'un appareil de gestion de réseau centralisé 100 qui communique avec l'unité de commande de chaque noeud par des liaisons 99 pour configurer le noeud, par exemple en fonction d'instructions fournies par un opérateur humain.

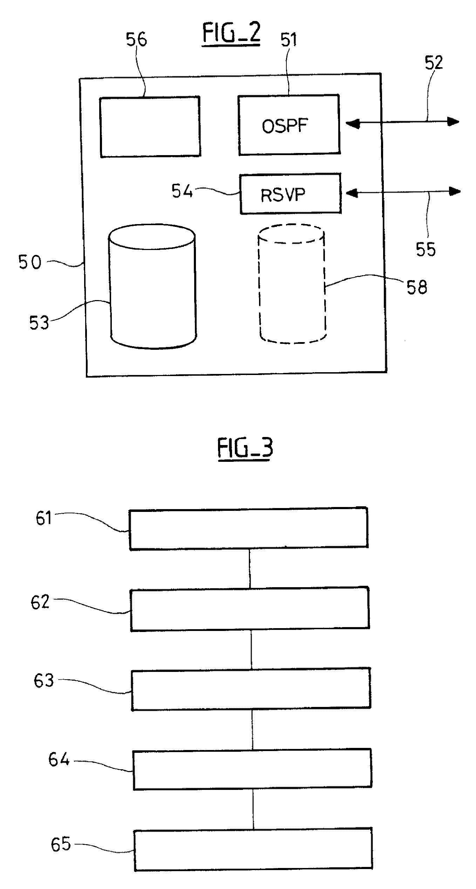

En référence à la figure 2, on a représenté fonctionnellement une unité de commande de noeud 50 dans un mode de réalisation mettant en oeuvre la suite protocolaire GMPLS, utilisable dans les noeuds 1 à 4. Un module de routage 51 met en oeuvre un protocole de routage à état des liens, par exemple OSPF-TE ou IS-IS-TE, et échange des messages de routage 52 avec les autres noeuds conformément à ce protocole, de manière à disséminer des informations de topologie, de connectivité et de capacité des liens du réseau, selon la technique connue. L'unité de commande de noeud 50 comporte une base de données d'ingénierie de trafic 53 alimentée par le module de routage 51 et dans laquelle ces informations sont stockées et mises à jour de manière dynamique.

Le contrôleur de noeud 50 comporte une base de données physiques 58 dans laquelle sont stockés des paramètres physiques des liens et des noeuds du réseau. La base de données physiques 58 est par exemple alimentée par le module de routage 51 pour mettre à jour ces informations de manière dynamique. En variante, la base de données physiques 58 peut être alimentée à partir d'un appareil de gestion du réseau centralisé. Différentes sortes de données physiques peuvent être prévues dans la base de données 58, de façon à permettre un calcul prédictif de la dégradation des signaux optiques le long d'un chemin transparent donné dans le réseau. Par exemple, des paramètres utilisables dans ce but sont la dispersion chromatique cumulée par lien, la dégradation d'OSNR par lien, la phase non-linéaire cumulée par lien, la dispersion de mode de polarisation (PMD) du lien, etc. Ces paramètres étant pour partie dépendants de la longueur d'onde, les valeurs relatives au pire canal de longueur d'onde peuvent être retenues, ou des valeurs moyennées sur le spectre utilisé dans le réseau, ou des tableaux de valeurs propres à des intervalles de longueur d'onde respectifs. Bien qu'on ait représenté la base de données 58 de manière unitaire et séparée par mesure de simplicité, il est possible de structurer ces données de différentes manières, notamment sous la forme de plusieurs structures de données interconnectées.

Un module de signalisation 54 met en oeuvre un protocole de signalisation, par exemple RSVP-TE, et échange des messages de signalisation 55 avec les autres noeuds conformément à ce protocole, de manière à gérer les connexions traversant le noeud, notamment les opérations d'établissement, de modification ou de suppression d'une connexion. La base de données d'ingénierie de trafic 53 est mise à jour en fonction des connexions établies à travers le noeud, sous le contrôle d'un module de contrôle d'admission 56, de manière à enregistrer de manière dynamique l'état d'occupation des ressources.

Il existe plusieurs possibilités pour réaliser le transport des messages de contrôle, notamment les messages de routage 52 et messages de signalisation 55 dans un réseau GMPLS. Par exemple, ces messages peuvent être transportés sur les mêmes liens que le trafic de données (« in-fiber ») ou sur des liens dédiés distincts, sur les mêmes canaux (« in-band ») ou sur des canaux dédiés distincts.

Pour procéder à l'établissement d'une connexion dans le réseau de la figure 1, par exemple un LSP (en anglais Label-Switched Path) de type Lambda entre le noeud 1 et le noeud 4, il existe essentiellement trois classes d'opérations à mettre en oeuvre : la détermination d'un chemin spatial, autrement dit la détermination des noeuds et des liens qui vont être utilisés, l'allocation des longueurs d'onde, autrement dit la détermination du ou des canaux qui vont être utilisés sur ces liens, et la prise en compte des dégradations physiques du signal optique, autrement dit la détermination de la qualité de signal pouvant être obtenue au niveau de la destination. Le document "A Framework for the Control of Wavelength Switched Optical Networks (WSON) with Impairments", G. Bernstein et al., 5 mai 2009, de l'IETF décrit plusieurs architectures possibles pour mettre en oeuvre ces opérations, dénommées respectivement en anglais Routing, Wavelength Assignment et Impairment Validation.

On décrit maintenant un mode de réalisation d'un procédé convenant pour effectuer ces opérations dans le cas d'une connexion bidirectionnelle.

L'information sur la topologie du réseau, par exemple telle que stockée dans la base de données 53 d'un ou plusieurs des noeuds du réseau, comporte des liens bidirectionnels 10, 20, 30 et 40 reliant respectivement les noeuds 1 et 2, 2 et 3, 3 et 4, et 4 et 1. Un lien bidirectionnel est à chaque fois une association des deux liaisons unidirectionnelles de sens opposés s'étendant entre une paire de noeuds de commutation, autrement dit deux liaisons contradirectionnelles. Chaque lien bidirectionnel 10 à 40 fait l'objet d'un enregistrement dans la base de donnés 53 pour représenter ses propriétés. Par exemple, un lien bidirectionnel est enregistré sous la forme d'un lien agrégé (bundled link) dont les composantes (component links) comportent les deux liaisons contradirectionnelles correspondantes. Plus de détails sur la représentation et l'utilisation des liens agrégés dans un réseau GMPLS sont donnés dans la Request for Comment 4201 de l'IETF, octobre 2005. La représentation de la topologie du réseau sous la forme de liens agrégés, notamment sous la forme des liens bidirectionnels 10, 20, 30 et 40 permet de limiter le volume des données de topologie transportées et gérées par le plan de contrôle du réseau. Une opération de calcul de route peut être exécutée sur la base de cette représentation pour fournir un chemin spatial sous la forme d'une séquence de liens bidirectionnels, par exemple la séquence 10-20-30 dans l'exemple précité.

Pour représenter les dégradations physiques des signaux le long du chemin de connexion, un processus d'agrégation correspondant est utilisé. Un descripteur des propriétés physiques de chaque lien bidirectionnel est stocké dans le réseau, par exemple dans la base de données 58 d'un ou plusieurs des noeuds ou dans l'appareil 100. Ce descripteur du lien bidirectionnel comporte un ou plusieurs paramètres physiques, qui est obtenu à chaque fois à partir de paramètres physiques correspondants de chacune des liaisons ainsi agrégées. Un procédé de détermination ou de prédiction de la qualité physique de la transmission sur le chemin de connexion peut ainsi être exécuté sur la base des descripteurs des liens bidirectionnels qui constituent ce chemin pour fournir un résultat qualifiant les deux sens de propagation conjointement. Un tel procédé évite ainsi de faire le calcul des dégradations physiques séparément dans les deux sens de la connexion.

De nombreuses méthodes sont envisageables pour représenter les paramètres physiques d'un lien agrégé. Une représentation à la fois compacte et fiable des dégradations physiques encourues par les signaux peut être obtenue à l'aide des paramètres figurant dans le tableau suivant :

| Notation du paramètre de dégradation physique | Signification du paramètre | Règle de calcul du paramètre pour le lien agrégé | Formule pour le lien bidirectionnel 10 |
|---|---|---|---|
| P1 | Dégradation du rapport signal sur bruit optique (OSNR) | Valeur minimale parmi les composantes du lien agrégé | P1 (10)= Min [P1 (11), P1 (12)] |
| P2 | Dispersion de mode de polarisation | Valeur quadratique moyenne des composantes du lien agrégé | P2(10)=√[(P2(11)²+P2(12)²]/2 |
| P3 | Dispersion chromatique résiduelle | Valeur moyenne arithmétique des composantes du lien agrégé | P3(10)=[(P3(11)+P3(12)]/2 |
| P4 | Phase non linéaire | Valeur maximale parmi les composantes du lien agrégé | P4(10)= Max [P4(11), P4(12)] |

Dans le tableau ci-dessus, la notation Pi(k) désigne la valeur du paramètre Pi, i étant un nombre entier allant de 1 à 4, pour le lien portant le chiffre de référence k. La quatrième colonne explicite les quatre paramètres de dégradation physique retenus pour constituer un descripteur du lien bidirectionnel 10. Les autres liens bidirectionnels sont représentés par des descripteurs respectifs obtenus de la même manière.

Dans un mode de réalisation, la détermination de la qualité de transmission d'une future connexion est réalisée en exploitant les descripteurs de lien bidirectionnel obtenus de cette manière conformément au méthodes exposées dans FR-A-2864386 pour exploiter le vecteur de qualité de transmission d'une liaison unidirectionnelle. En d'autres termes, pour un chemin composé d'une séquence de liens bidirectionnels, les paramètre Pi (i étant un nombre entier allant de 1 à 4) des liens bidirectionnels respectifs sont composés par les lois de composition énoncées dans FR-A-2864386 pour obtenir des valeurs caractérisant la connexion bidirectionnelle de bout en bout. Une fonction d'interpolation permet alors de déterminer une valeur estimée de taux d'erreur binaire, valide pour les deux sens de propagation, à partir des valeurs de paramètres de dégradation physique cumulées le long du chemin de la connexion. Une telle exploitation peut être intégrée de différentes manière dans un procédé d'établissement de connexion, notamment selon les différentes architectures conceptuelles énoncées dans le document précité "A Framework for the Control of Wavelength Switched Optical Networks (WSON) with Impairments".

La figure 3 représente un procédé convenant pour engendrer des descripteurs de liens agrégés de manière automatisée. Ce procédé peut être mis en oeuvre par l'unité de commande d'un ou plusieurs des noeuds du réseau ou dans un appareil de gestion centralisé.

A l'étape 61, les composantes d'un lien agrégé sont déterminées, par exemple par consultation d'une base de donnée d'ingénierie de trafic.

A l'étape 62, des paramètres de dégradation physique de chaque composante du lien agrégé sont fournis, par exemple sous la forme d'un ou plusieurs fichiers de configuration. Ces données peuvent être entrées manuellement par un opérateur ou déterminées automatiquement par un mécanisme d'auto-découverte. Les paramètres de dégradation physique comportent par exemple les quatre paramètres Pi précités de chaque composante du lien agrégé.

A l'étape 63, les paramètres de dégradation physique du lien agrégé sont calculés en fonction des paramètres correspondants des composantes du lien agrégé, par exemple selon les formules précitées.

A l'étape 64, un descripteur du lien agrégé est stocké, par exemple sous la forme d'une ou plusieurs structures de données TLV (en anglais Type, Length, Value) ou autre.

A l'étape 65, le descripteur du lien agrégé est envoyé à destination d'un ou plusieurs noeuds du réseau, par exemple sous la forme d'un message Link State Advertisment du protocole de routage OSPF-TE. Toutefois, cette diffusion n'est nécessaire que si l'exploitation du descripteur du lien agrégé est effectuée par un appareil différent de celui qui a engendré ce descripteur.

Dans un mode de réalisation, un appareil de gestion de réseau centralisé collecte les descripteurs de tous les liens d'un réseau ou d'un domaine et effectue de manière centralisée la détermination de la qualité de transmission des connexions dans ce réseau ou domaine. Dans un autre mode de réalisation, la détermination de la qualité de transmission d'une connexion est effectuée de manière distribuée par les unités de commande des noeuds situés sur le chemin de la connexion. Dans un tel cas, il peut être suffisant que chaque noeud connaissent seulement les descripteurs des liens qui lui sont adjacents.

Le procédé de la figure 3 peut être appliqué à tout lien agrégé, notamment à un lien agrégé comportant de composantes dans deux sens opposés, c'est-à-dire un lien bidirectionnel, ou un lien agrégé unidirectionnel. Le nombre de composantes peut être quelconque.

Certains des éléments représentés, notamment les unités de commande, serveurs et autres modules, peuvent être réalisés sous différentes formes, de manière unitaire ou distribuée, au moyen de composants matériels et/ou logiciels. Des composants matériels utilisables sont les circuits intégrés spécifiques ASIC, les réseaux logiques programmables FPGA ou les microprocesseurs. Des composants logiciels peuvent être écrits dans différents langages de programmation, par exemple C, C++, Java ou VHDL. Cette liste n'est pas exhaustive.

Un appareil de gestion de réseau peut être un équipement matériel, par exemple un micro-ordinateur, une station de travail, un appareil connecté à l'Internet ou tout autre dispositif de communication dédié ou à usage général. Des programmes logiciels exécutés par ce système remplissent des fonctions de gestion du réseau pour contrôler des éléments de réseau.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre ou « inclure et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes. Plusieurs moyens ou modules peuvent être représentés par un même élément matériel.

Dans les revendications, tout signe de référence entre parenthèses ne saurait être interprété comme une limitation de la revendication.

## Revendications

1. Procédé pour engendrer une représentation des dégradations physiques dans un réseau de communication optique comportant des noeuds de commutation transparents (1 , 2, 3, 4) mutuellement reliés par des liaisons optiques (11, 12, 21, 22, 31, 32, 41 , 42), **caractérisé en ce que** ledit procédé comporte :
associer une paire de liaisons optiques contradirectionnelles en tant que lien bidirectionnel (10, 20, 30, 40),
fournir au moins un paramètre de dégradation physique respectif de chacune desdites liaisons optiques contradirectionnelles de ladite paire,
déterminer au moins un paramètre de dégradation physique caractéristique dudit lien bidirectionnel à partir desdits paramètres de dégradation physique des liaisons optiques contradirectionnelles de ladite paire,
stocker un descripteur du lien bidirectionnel comportant ledit au moins un paramètre de dégradation physique caractéristique dudit lien bidirectionnel.

2. Procédé selon la revendication 1, **caractérisé par le fait que** ledit au moins un paramètre de dégradation physique caractéristique dudit lien bidirectionnel comporte un paramètre de dispersion chromatique résiduelle, ledit paramètre de dispersion chromatique résiduelle étant obtenu en tant que la valeur moyenne arithmétique de paramètres de dispersion chromatique résiduelle de chacune desdites liaisons optiques contradirectionnelles de ladite paire.

3. Procédé selon la revendication 1, **caractérisé par le fait que** ledit au moins un paramètre de dégradation physique caractéristique dudit lien bidirectionnel comporte un paramètre de rapport signal à bruit optique, ledit paramètre de rapport signal à bruit optique étant obtenu en tant que la plus petite valeur des paramètres de rapport signal à bruit optique de chacune desdites liaisons optiques contradirectionnelles de ladite paire.

4. Procédé selon la revendication 1, **caractérisé par le fait que** ledit au moins un paramètre de dégradation physique caractéristique dudit lien bidirectionnel comporte un paramètre de phase non-linéaire, ledit paramètre de phase non-linéaire étant obtenu en tant que la plus grande valeur des paramètres de phase non-linéaire de chacune desdites liaisons optiques contradirectionnelles de ladite paire.

5. Procédé selon la revendication 1, **caractérisé par le fait que** ledit au moins un paramètre de dégradation physique caractéristique dudit lien bidirectionnel comporte un paramètre de dispersion de mode de polarisation, ledit paramètre de dispersion de mode de polarisation étant obtenu en tant que la valeur moyenne quadratique de paramètres de dispersion de mode de polarisation de chacune desdites liaisons optiques contradirectionnelles de ladite paire.

6. Procédé selon la revendication 1, comportant l'étape de diffuser ledit descripteur du lien bidirectionnel dans un message d'un protocole de routage à destination d'un ou plusieurs desdits noeuds du réseau de communication optique.

7. Base de données de liens (58) pour un réseau de communication optique comportant des noeuds de commutation transparents (1) mutuellement reliés par des liaisons optiques (11, 12), **caractérisée en ce que** ladite base de données est configurée pour comprendre un descripteur dudit lien bidirectionnel (10) comprenant au moins deux liaisons optiques contradirectionnelles, ledit descripteur de lien bidirectionnel comportant au moins un paramètre de dégradation physique caractéristique dudit lien bidirectionnel, ledit paramètre de dégradation physique étant obtenu à partir de paramètres de dégradation physique correspondants de chacune desdites liaisons optiques contradirectionnelles de ladite paire.

8. Procédé pour déterminer une qualité de transmission d'une connexion optique transparente, ladite connexion étant destinée relier au moins deux dispositifs émetteurs-récepteurs optiques de manière bidirectionnelle le long d'un chemin de connexion dans un réseau de communication optique, **caractérisé en ce que** ledit procédé comprend les étapes consistant à :
fournir un descripteur de lien bidirectionnel pour chacun d'une pluralité de liens bidirectionnels (10, 20, 30) disposés sur ledit chemin de connexion, ledit descripteur de lien bidirectionnel comportant à chaque fois au moins un paramètre de dégradation physique caractéristique dudit lien bidirectionnel, ledit lien bidirectionnel comportant à chaque fois une paire de liaisons optiques contradirectionnelles, ledit paramètre de dégradation physique étant obtenu à partir de paramètres de dégradation physique correspondants de chacune desdites liaisons optiques contradirectionnelles de ladite paire,
déterminer ladite qualité de transmission de la connexion en fonction desdits descripteurs de liens bidirectionnels.

9. Procédé selon la revendication 8, **caractérisé par le fait que** ledit au moins un paramètre de dégradation physique caractéristique dudit lien bidirectionnel comporte un paramètre cumulatif, ledit procédé comportant la détermination d'une valeur dudit paramètre cumulatif cumulée le long dudit chemin de connexion et la détermination de la qualité de transmission en fonction de ladite valeur cumulée le long dudit chemin de connexion.

10. Appareil pour déterminer la qualité de transmission dans un réseau de communication optique comprenant des noeuds de communication transparents (1, 2, 3, 4) relies mutuellement par des liaisons optiques (11, 12, 21, 22, 31, 32, 41, 42), **caractérisé en ce que** ledit appareil comprend :
des moyens pour associer une paire de liaisons optiques contre-directionnelles en tant que lien bidirectionnel (10, 20, 30, 40),
des moyens pour fournir au moins un paramètre de dégradation physique respectif de pour chacune desdites liaisons optiques contre-directionnelles de ladite paire,
des moyens pour déterminer au moins un paramètre de dégradation physique caractéristique dudit lien bidirectionnel à partir desdits paramètres de dégradation physique des liaisons optiques contre-directionnelles de ladite paire, et
des moyens pour stocker un descripteur du lien bidirectionnel comprenant ledit au moins un paramètre de dégradation physique caractéristique dudit lien bidirectionnel.

11. Réseau de communication optique comprenant l'appareil selon la revendication 10 et la base de données selon la revendication 7.

## Patentansprüche

1. Verfahren zum Generieren einer Darstellung physikalischer Verschlechterungen in einem optischen Kommunikationsnetzwerk, transparente Schaltknoten (1, 2, 3, 4) umfassend, gegenseitig miteinander verbunden durch optische Verbindungen (11, 12, 21, 22, 31, 32, 41, 42), **dadurch gekennzeichnet, dass** besagtes Verfahren umfasst:
das Assoziieren eines Paares kontradirektionaler optischer Verbindungen in der Eigenschaft als bidirektionale Verbindung (10, 20, 30, 40),
das Bereitstellen mindestens eines physikalischen Verschlechterungsparameters einer jeden der besagten, kontradirektionalen optischen Verbindungen besagten Paares,
das Bestimmen mindestens eines, besagte bidirektionale Verbindung charakterisierenden, physikalischen Verschlechterungsparameters auf der Grundlage der besagten, physikalischen Verschlechterungsparameter der kontradirektionalen optischen Verbindungen besagten Paares.
das Speichern eines Beschreibers der bidirektionalen Verbindung, besagten mindestens einen physikalischen Verschlechterungsparameter umfassend, der besagte bidirektionale Verbindung charakterisiert.

2. Verfahren nach Anspruch 1, **dadurch gekennzeichnet, dass** der besagte, mindestens eine physikalische Verschlechterungsparameter, der besagte bidirektionale Verbindung charakterisiert, einen Parameter für die chromatische Restdispersion umfasst, wobei besagter Parameter für die chromatische Restdispersion als arithmetischer Durchschnittswert der chromatischen Restdispersion einer jeden der besagten, kontradirektionalen optischen Verbindungen besagten Paares ermittelt wird.

3. Verfahren nach Anspruch 1, **dadurch gekennzeichnet, dass** der besagte, mindestens eine physikalische Verschlechterungsparameter, der besagte bidirektionale Verbindung charakterisiert, einen Parameter des optischen Signalrauschabstands, umfasst, wobei besagter Parameter des optischen Signalrauschabstands als der kleinste Wert der optischen Signalrauschabstände einer jeden der besagten, kontradirektionalen optischen Verbindungen besagten Paares ermittelt wird.

4. Verfahren nach Anspruch 1, **dadurch gekennzeichnet, dass** der besagte, mindestens eine physikalische Verschlechterungsparameter, der besagte bidirektionale Verbindung charakterisiert, einen Parameter nichtlinearer Phasen umfasst, wobei besagter Parameter nichtlinearer Phasen als höchster Wert der Parameter nichtlinearer Phasen einer jeden der besagten, kontradirektionalen optischen Verbindungen besagten Paares ermittelt wird.

5. Verfahren nach Anspruch 1, **dadurch gekennzeichnet, dass** der besagte, mindestens eine physikalische Verschlechterungsparameter, der besagte bidirektionale Verbindung charakterisiert, einen Parameter der Polarisationsmodendispersion umfasst, wobei besagter Parameter der Polarisationsmodendispersion als Durchschnitts-Quadratwert der Parameter der Polarisationsmodendispersion einer jeden der besagten, kontradirektionalen optischen Verbindungen besagten Paares ermittelt wird.

6. Verfahren nach Anspruch 1, den Schritt des Übertragens besagten Beschreibers der bidirektionalen Verbindung in einer Nachricht eines Routingprotokolls umfasst, welche an einen oder mehrere besagter Knoten des optischen Kommunikationsnetzwerks gerichtet ist.

7. Verbindungsdatenbank (58) für ein optisches Kommunikationsnetzwerk, welches transparente Schaltknoten (1) umfasst, gegenseitig miteinander verbunden durch optische Verbindungen (11, 12), **dadurch gekennzeichnet, dass** besagte Datenbank dafür konfiguriert ist, um einen Beschreiber besagter bidirektionaler Verbindung (10) zu umfassen, welche mindestens zwei kontradirektionale optische Verbindungen umfasst, wobei besagter Beschreiber besagter bidirektionaler Verbindung mindestens einen physikalischen Verschlechterungsparameter umfasst, der besagte bidirektionale Verbindung charakterisiert, wobei besagter physikalischer Verschlechterungsparameter auf der Grundlage von physikalischen Verschlechterungsparametern ermittelt wird, die einer jeden der besagten, kontradirektionalen optischen Verbindungen besagten Paares entsprechen.

8. Verfahren zum Bestimmen der Übertragungsqualität einer transparenten optischen Verbindung, wobei besagte Verbindung dazu bestimmt ist, mindestens zwei optische Sender-Empfänger-Geräte bidirektional über einen Verbindungspfad in dem optischen Kommunikationsnetzwerk zu verbinden, **dadurch gekennzeichnet, dass** besagtes Verfahren die folgenden Etappen umfasst:
das Bereitstellen eines Beschreibers einer bidirektionalen Verbindung für jede aus einer Vielzahl bidirektionaler Verbindungen (10, 20, 30), die auf besagtem Verbindungspfad angeordnet sind, wobei besagter Beschreiber einer bidirektionalen Verbindung jeweils mindestens einen physikalischen Verschlechterungsparameter besagter bidirektionaler Verbindung umfasst, wobei besagte bidirektionale Verbindung jeweils ein Paar kontradirektionaler optischer Verbindungen umfasst, wobei besagter physikalischer Verschlechterungsparameter auf der Grundlage physikalischer Verschlechterungsparameter ermittelt wird, die einer jeden der besagten, kontradirektionalen optischen Verbindungen des besagten Paares entsprechen, bestimmen besagter Übertragungsqualität der Verbindung in Abhängigkeit von besagten Beschreibern bidirektionaler Verbindungen.

9. Verfahren nach Anspruch 8, **dadurch gekennzeichnet, dass** besagter mindestens eine physikalische Verschlechterungsparameter besagter bidirektionaler Verbindung einen kumulativen Parameter umfasst, wobei besagtes Verfahren das Bestimmen eines kumulativen Werts besagten kumulativen Parameters auf besagtem Verbindungspfad sowie das Bestimmen der Übertragungsqualität gemäß besagtem kumulativem Wert auf besagtem Verbindungspfad umfasst.

10. Gerät zum Bestimmen der Übertragungsqualität in einem optischen Kommunikationsnetzwerk, transparente Schaltknoten (1, 2, 3, 4) umfassend, gegenseitig miteinander verbunden durch optische Verbindungen (11, 12, 21, 22, 31, 32, 41, 42), **dadurch gekennzeichnet, dass** besagtes Gerät umfasst:
Mittel für das Assoziieren eines Paares kontradirektionaler optischer Verbindungen in der Eigenschaft als bidirektionale Verbindungen (10, 20, 30, 40),
Mittel für das das Bereitstellen mindestens eines physikalischen Verschlechterungsparameters einer jeden der besagten, kontradirektionalen optischen Verbindungen besagten Paares,
Mittel für das Bestimmen mindestens eines, besagte bidirektionale Verbindung charakterisierenden, physikalischen Verschlechterungsparameters auf der Grundlage der besagten, physikalischen Verschlechterungsparameter der kontradirektionalen optischen Verbindungen besagten Paares, und
Mittel für das Speichern eines Beschreibers der bidirektionalen Verbindung, besagten mindestens einen physikalischen Verschlechterungsparameter umfassend, der besagte bidirektionale Verbindung charakterisiert.

11. Optisches Kommunikationsnetzwerk, das Gerät nach Anspruch 10 und die Datenbank nach Anspruch 7 umfassend.

## Claims

1. A method for generating a representation of physical degradations in an optical communication network comprising transparent switching nodes (1, 2, 3, 4) mutually linked by optical connections (11, 12, 21, 22, 31, 32, 41, 42), **characterized in that** said method comprises:
associating a pair of opposite-direction optical connections as a bidirectional link (10, 20, 30, 40), providing at least one respective physical degradation parameter of each of said opposite-direction optical connections of said pair,
determining at least one physical degradation parameter that is characteristic of said bidirectional link based on said physical degradation parameters of the opposite-direction optical connections of said pair,
storing a descriptor of the bidirectional link comprising said at least one physical degradation parameter that is characteristic of said bidirectional link.

2. A method according to claim 1, **characterized by** the fact that said at least one physical degradation parameter that is characteristic of said bidirectional link comprises a residual chromatic dispersion parameter, said residual chromatic dispersion parameter being obtained as the arithmetic mean value of residual chromatic dispersion parameters of each of said opposite-direction optical connections of said pair.

3. A method according to claim 1, **characterized by** the fact that said at least one physical degradation parameter that is characteristic of said bidirectional link comprises an optical signal-to-noise ratio parameter, said optical signal-to-noise ratio parameter being obtained as the lowest value of the optical signal-to-noise ratio of each of said opposite-direction optical connections of said pair.

4. A method according to claim 1, **characterized by** the fact that said at least one physical degradation parameter that is characteristic of said bidirectional link comprises a non-linear phase parameter, said non-linear phase parameter being obtained as the greatest value of the non-linear phase parameters of each of said opposite-direction optical connections of said pair.

5. A method according to claim 1, **characterized by** the fact that said at least one physical degradation parameter that is characteristic of said bidirectional link comprises a polarization mode dispersion parameter, said polarization mode dispersion parameter being obtained as the quadratic mean value of polarization mode dispersion parameters of each of said opposite-direction optical connections of said pair.

6. A method according to claim 1, comprising the step of distributing said descriptor of the bidirectional link in a routing protocol message to one or more of said nodes of the optical communication network.

7. A database of links (58) for an optical communication network comprising transparent switching nodes (1) mutually connected by optical connections (11, 12), **characterized in that** said database is configured to comprise a descriptor of said bidirectional link (10) comprising at least two opposite-direction optical connections, said bidirectional link descriptor comprising at least one physical degradation parameter that is characteristic of said bidirectional link, said physical degradation parameter being obtained from corresponding physical degradation parameters of each of said opposite-direction optical connections of said pair.

8. A method for determining a transmission quality of a transparent optical connection, said connection being intended to connect at least two optical transmitter-receiver devices bidirectionally along a connection path in an optical communication network, **characterized in that** said method comprises the steps of:
providing a bidirectional link descriptor for each of a plurality of bidirectional links (10, 20, 30) arranged along said connection path, said bidirectional link descriptor comprising in each instance at least one physical degradation parameter that is characteristic of said bidirectional link, said bidirectional link comprising in each instance a pair of opposite-direction optical connections, said physical degradation parameter being obtained from corresponding physical degradation parameters of each of said opposite-direction optical connections of said pair,
determining said transmission quality of the connection based on said descriptors of bidirectional links.

9. A method according to claim 8, **characterized by** the fact that said at least one physical degradation parameter that is characteristic of said bidirectional link comprises a cumulative parameter, said method comprising the determining of a value of said cumulative parameter totalled along said connection path, and the determining of the transmission quality based on said cumulative value along said connection path.

10. A device for determining transmission quality in an optical communication network comprising transparent switching nodes (1, 2, 3, 4) mutually linked by optical connections (11, 12, 21, 22, 31, 32, 41, 42), **characterized in that** said method comprises:
means for associating a pair of opposite-direction optical connections as a bidirectional link (10, 20, 30, 40),
means for providing at least one respective physical degradation parameter for each of said opposite-direction optical connections of said pair,
means for determining at least one physical degradation parameter characteristic of said bidirectional link based on said physical degradation parameters of the opposite-direction optical connections of said pair, and
means for storing a descriptor of the bidirectional link comprising said at least one physical degradation parameter that is characteristic of said bidirectional link.

11. An optical communication network comprising the device according to claim 10 and the database according to claim 7.
